(19) Europäisches Patentamt
European Patent Office
Office européen des brevets

(11) **EP 2 518 549 B1**

(12) **EUROPEAN PATENT SPECIFICATION**

(45) Date of publication and mention
of the grant of the patent:
**07.05.2014 Bulletin 2014/19**

(51) Int Cl.:
*G02B 6/35* *(2006.01)*   *G02B 6/32* *(2006.01)*
*G02B 6/28* *(2006.01)*   *G02B 6/06* *(2006.01)*

(21) Application number: **11290198.8**

(22) Date of filing: **26.04.2011**

(54) **Spatial multiplexer for coupling single-mode fibers to a multi-core fiber**

Räumlicher Multiplexer zur Kopplung von Einzelmodusfasern an eine Mehrkernfaser

Multiplexeur spatial pour coupler des fibres en mode unique à une fibre multi-coeurs

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.10.2012 Bulletin 2012/44**

(73) Proprietor: **Alcatel Lucent
75007 Paris (FR)**

(72) Inventor: **Franz, Bernd
74336 Brackenheim (DE)**

(74) Representative: **Wetzel, Emmanuelle
Alcatel Lucent
Intellectual Property & Standards
70430 Stuttgart (DE)**

(56) References cited:
**EP-A1- 0 836 103**      **EP-A2- 1 457 795**
**FR-A1- 2 860 599**      **JP-A- 54 157 634**
**US-A1- 2004 076 366**   **US-A1- 2004 202 417**
**US-A1- 2010 040 325**

## Description

The present document relates to an optical coupling device. In particular, the present document relates to an optical coupling device which is adapted to couple light between a plurality of single-mode fibers and a plurality of cores of a multicore fiber.

Multi-core fibers (MCF) enable to save space compared to bundles of standard single-mode fibers (SMF). When using multi-mode fibers (MMF), mode conversion is required in order to transport optical signals from a plurality of SMFs over a MMF. This may be difficult to achieve. In case of MCFs only LP01-modes have to be coupled from a plurality of incoming SMFs to the different cores of the MCF, without the need for mode conversion. As such, the use of MCFs may be preferable over multi-mode transmission using MMFs.

US2004/0202417 describes an optical monitor device comprising a multi-core input tape fiber and a multi-core output tape fiber.

The present document addresses the technical problem of coupling the incoming optical signals or beams from the plurality of incoming SMFs into corresponding cores of the MCF (or vice versa). It has been found that an effective coupling between the plurality of SMFs and the MCF may be achieved by effectively adapting the distances between the incoming beams from the plurality of SMFs, which are typically determined by the core diameters of the plurality of SMFs, to the distances between the cores within the MCF. This distance adaptation should be performed without producing losses and/or crosstalk that exceed pre-determined thresholds. In the present document a method and device for achieving such coupling are described.

According to an aspect, an optical coupling device adapted to couple light between a light source and/or drain and a corresponding core of a multi-core fiber (MCF) is described. The light source and/or drain may be a single-mode fiber (SMF). Alternatively, the light source may be an optical transmitter, e.g. a laser or a light emitting diode, having an active surface which generates light (e.g. an optical light beam or an optical signal). Alternatively, the light drain may be an optical receiver, e.g. a photodiode, having an active surface, e.g. for converting a received optical signal into an electrical signal.

The core of the multi-core fiber (MCF) may be positioned at a lateral core distance (referred to herein as x, with x being greater than zero) from a center axis of the multi-core fiber. Typically, the MCF comprises a plurality of cores which may be positioned at different core distances from the center axis of the MCF. The plurality of cores may be arranged in a circular manner around the center axis in one or more circles have a radius corresponding to one or more core distances. Furthermore, the MCF may comprise a center core positioned along the center axis of the MCF. The plurality of cores (including the center core) of the MCF may form optical waveguides (typically single mode waveguides) for a corresponding plurality of optical signals.

The optical coupling device may comprise a first interface adapted to connect with the multi-core fiber. The first interface may be positioned at a first side of the optical coupling device (e.g. a front side of the optical coupling device). By way of example, the first interface may be implemented as an optical connector adapted to fix the MCF at a particular position. In particular, the first interface may be adapted to fix an endface of the multi-core fiber at a particular position. The position may be selected such that the core of the multi-core fiber is fixed at the core distance x (in lateral direction) from a first focal point of the center lens. The first focal point may be the focal point of the center lens towards the first side of the optical coupling device. As indicated above, the core of the multi-core fiber may be positioned at the core distance x from the center axis of the multi-core fiber. As such, the first interface may be adapted to fix the multi-core fiber such that its center axis is aligned with the first focal point of the center lens.

The optical coupling device may comprise a second interface. The second interface may be positioned at the first side of the optical coupling device, possibly adjacent to the first interface. As such, the first and second interface may be at a certain lateral axis distance from one another on the same side (e.g. the front side) of the optical coupling device. The second interface may be adapted to connect with the light source and/or drain, respectively. By way of example, the second interface may be a connector adapted to fix the light source and/or drain at a certain position. In particular, the second interface may be adapted to position the light source and/or drain at the lateral axis distance d, with d being greater zero, from the center axis of the multi-core fiber. In case the light source and/or drain is a fiber, the second interface may be adapted to position a core of the fiber (e.g. an endface of the core of the fiber) at the lateral axis distance d from the center axis of the multi-core fiber.

Overall, the first and second interface may be adapted to position the core of the multi-core fiber and the light source and/or drain at an overall lateral distance which may be the sum of the lateral axis distance d and the lateral core distance x.

The optical coupling device may comprise a lens array, wherein the lens array may comprise the outer lens and the adjacent center lens. The outer lens and the center lens may have an optical axis. The optical axes of the outer lens and the center lens may be parallel with respect to one another. Furthermore, the optical axes may be positioned at the lateral axis distance d from one another.

The second interface may be adapted to fix the light source and/or drain substantially on (the extension of) the optical axis of the outer lens. In case the core of the multi-core fiber is at a lateral core distance x from the center axis of the multi-core fiber, the first interface may be adapted to fix the multi-core fiber such that the center axis of the multi-core fiber is aligned with the optical axis of the center lens.

The outer lens may be adapted to collimate light from the light source and/or focus light to the light drain. For this purpose the outer lens may have a first focal point towards the first side of the optical coupling device. Furthermore, the outer lens may have a second focal point towards a second side of the optical coupling device (e.g. the rear side of the optical coupling device). The center lens may be adapted to collimate light from the center axis of the multi-core fiber and/or focus light to the center axis of the multi-core fiber. For this purpose, the center lens may have a first focal point towards the first side of the optical coupling device. Furthermore, the center lens may have a second focal point towards the second side of the optical coupling device.

The optical coupling device may comprise a reflective device. The reflective device may be spaced from the lens array. In particular, the reflective device may be spaced from the lens array at a longitudinal distance opposite of the first side of the optical coupling device. By way of example, the reflective device may be positioned at or towards the second side of the optical coupling device, wherein the second side may be opposite of the first side. The reflective device may be adapted to reflect light coming from the outer lens towards the center lens and/or to reflect light coming from the center lens towards the outer lens. The reflective device may be positioned substantially on (the extension of) the optical axis of the outer lens.

The reflective device may be adapted to reflect light at a reflection angle $\alpha$, wherein the reflection angle $\alpha$ depends on the core distance x and the first focal length f of the center lens. In particular, the reflection angle $\alpha$ may depend on a ratio of the core distance x and the first focal length f the center lens. Alternatively or in addition, the reflection angle $\alpha$ may depend on the axis distance d and a longitudinal distance between the center lens and the reflective device. The longitudinal distance between the center lens and the reflective device may be given by a distance z plus the first focal length f of the center lens. As such, the reflection angle $\alpha$ may be given by $z = d / \tan(\alpha)$ and/or $x / f = \tan(\alpha)$.

As indicated above, the reflective device may be positioned at a longitudinal distance from the center lens. The longitudinal distance may depend on the first focal length f of the center lens, the axis distance d and the core distance x. In particular, the longitudinal distance may be the distance z plus the first focal length f of the center lens. The distance z may be determined as

$$z = f \cdot \frac{d}{x}.$$

As indicated above, the light source and/or drain may be a single-mode fiber. In this case, the second interface may be adapted to fix a core of the single-mode fiber at the lateral axis distance d from the center axis of the multi-core fiber. Furthermore, the second interface may be adapted to fix an endface of the core of the single-mode fiber at the first focal point of the outer lens towards the first side of the optical coupling device. Alternatively, the light source and/or drain may be a photonic transmitter (e.g. a laser or light emitting diode) or a photonic receiver (e.g. a photodiode). In such a case, the second interface may be adapted to fix an active surface of the photonic transmitter and/or the photonic receiver at the first focal point of the outer lens towards the first side of the optical coupling device. In addition, the second interface may be adapted to fix the active surface at the lateral axis distance d from the center axis of the multi-core fiber.

The coupling device may be adapted for coupling a plurality of light sources and/or drains with a plurality of cores of the MCF. The plurality of cores of the MCF may be positioned at a corresponding plurality of lateral core distances (greater zero) from the center axis of the multi-core fiber. As such, the optical coupling device may comprise a plurality of second interfaces. Each of the plurality of second interfaces may be adapted as outlined in the present document. In particular, the plurality of second interfaces may be positioned at the first side of the optical coupling device and adjacent to the first interface. Furthermore, the plurality of second interfaces may be adapted to connect with a corresponding plurality of light sources and/or drains. The plurality of light sources and/or drains may e.g. be a plurality of single-mode fibers or a plurality of optical transmitters and/or optical receivers. In addition, the plurality of second interfaces may be adapted to position each of the plurality of light sources and/or drains at a corresponding plurality of lateral axis distances greater zero from the center axis of the multi-core fiber. In particular, the plurality of second interfaces may be adapted to fix the plurality of light sources and/or drains at the lateral axis distance d around the center axis of the multi-core fiber. In other words, the plurality of light sources and/or drains may be fixed in a circular manner around the first interface, i.e. around the multi-core fiber. As such, the arrangement of the plurality of light sources and/or drains may be radial symmetric with the multi-core fiber in the center. Similarly, the arrangement of the first and second interfaces may be radial symmetric.

Overall, the first interface and the plurality of second interfaces may be adapted to position the plurality of cores of the multi-core fiber and the corresponding plurality of light source and/or drain at an overall lateral distance which - for each pair of core of the multi-core fiber and light source and/or drain - may be the sum of the corresponding lateral axis distance (from the plurality of lateral axis distances) and the corresponding lateral core distance (from the plurality of lateral core distances).

The lens array may comprise a plurality of outer lenses adjacent to the center lens. The plurality of outer lenses may have a corresponding plurality of optical axes. The plurality of second interfaces may be adapted to fix the plurality of light sources and/or drains substantially along (the extension of) the respective plurality of optical axes of the plurality of outer lenses. The plurality of optical axes may be positioned at the corresponding plurality of lateral axis distances from the optical axis of the center lens. In case of a circular arrangement, the plurality of optical axes of the plurality of outer lenses may be positioned at the axis distance d from the optical axis of the center lens.

Each of the plurality of outer lenses may be adapted to collimate light from a corresponding light source and/or focus light to a corresponding light drain of the plurality of light sources and/or drains. The reflective device may be adapted to reflect light coming from each of the plurality of outer lenses towards the center lens and/or to reflect light coming from the center lens towards at least one of the plurality of outer lenses. For this purpose, the reflective device may comprise a plurality of reflective elements, wherein each of the reflective elements may be adapted to perform an angled reflection at angle $\alpha$, as outlined in the present document.

As indicated above, the multi-core fiber may comprise a plurality of cores. The plurality of cores may be positioned at a corresponding plurality of lateral core distances from the center axis of the multi-core fiber. In particular, the plurality of cores may be positioned at the lateral core distance x around the center axis of the multi-core fiber. In other words, the plurality of cores may be positioned in a circular manner around the center axis of the MCF. More generally, the plurality of cores may be positioned in a plurality of circles around the center axis of the MCT. The optical coupling device may be adapted to couple light between the plurality of light sources and/or drains and the plurality of cores of the multi-core fiber, respectively. For this purpose, the plurality of second interfaces may be adapted to fix the plurality of light sources and/or drains at the lateral axis distance around the center axis of the multi-core fiber. In other words, the plurality of light sources and/or drains may be positioned around the MCF in a circular manner. The plurality of light sources and/or drains and the corresponding plurality of cores of the MCF may be positioned such that the ratio "distance of light source and/or drain to center axis of the MCF" over "distance of corresponding core of MCF to center axis of the MCF" is constant. Using this rule, the optical coupling device may be adapted for coupling a plurality of light sources and/or drains at various lateral axis distances d to and/or from a plurality of cores of the MCF at various lateral core distances x. As such, the optical coupling device may be configured to simultaneously couple a plurality of single-mode fibers arranged in a radial symmetrical way around a multi-core fiber with the multi-core fiber.

The reflective device may be implemented using liquid crystal on silicon (LCOS) technology. In this case, the optical coupling device may comprise a polarization unit, positioned between the reflective device and the lens array. The polarization unit may be adapted to split light coming from the outer lens into two linear polarized light components. In the opposite direction, the polarization unit may be adapted to merge two reflected linear polarized light components coming from the reflective device. In general terms, the polarization unit may be adapted to convert arbitrarily polarized light into two linear polarized light components (or vice versa). Both linear polarized light components may have the same polarization direction. This polarization direction may correspond to a preferred polarization direction of the LCOS based reflective device.

The polarization unit may be adapted such that a light path from an input of the polarization unit facing the lens array towards an output of the polarization unit facing the reflective device (i.e. a light path through the polarization unit from the first side of the coupling device to the second side of the coupling device), in combination with a light path from an input of the polarization unit facing the reflective device towards an output of the polarization unit facing the lens array (i.e. a light path through the polarization unit from the second side of the coupling device to the first side of the coupling device) is substantially the same for the two linear polarized light components. In other words, the polarization unit may be adapted such that arbitrarily polarized light which is split up into two linear polarized components and subsequently merged back into arbitrarily polarized light has substantially the same optical path length for both linear polarized components. This may be beneficial with regards to polarization mode dispersion.

Alternatively, the reflective device may be a segmented mirror and/or may be implemented using a micro-electromechanical system comprising at least one mirror.

The optical coupling device may be adapted to couple light into a center core of the MCF, wherein the center core is positioned at or along the center axis of the multi-core fiber. For this purpose, the reflective device may comprise a hole adapted to let pass light from and/or towards a center light source and/or drain. The optical coupling device may comprise a center interface at the second side of the optical coupling device (e.g. the rear side of the optical coupling device) adapted to connect the center light source and/or drain. The center lens of the lens array may be adapted to focus light coming from the center light source onto the center core of the multi-core fiber and/or collimate light coming from the center core of the multi-core fiber towards the center light drain.

According to a further aspect, a method for coupling light between a light source and/or drain and a corresponding core of a multi-core fiber is described. The core of the multi-core fiber may be positioned at a lateral core distance x greater zero from a center axis of the multi-core fiber. The method may comprise the steps of collimating light from the light source using an outer lens; reflecting light coming from the outer lens towards a center lens; and focusing the reflected light onto the core of the MCF using the center lens. In the opposite direction, the method may comprise the steps of collimating light from the core of the MCF using the center lens; reflecting light coming from the center lens towards the outer lens; and focusing light to the light drain using the outer lens. The dimensions and positioning of the light source and/or drain, the outer lens, the center lens, the reflective device, and the core of the MCF may be selected as outlined in the present document.

It should be noted that the methods and systems including its preferred embodiments as outlined in the present document may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein

Fig. 1 illustrates the functional principle of an example coupler;
Fig. 2 shows a block diagram of an example single mode fibers - multi core fiber coupler; and
Fig. 3 illustrates example segmented mirrors for six and seven input single mode fibers.

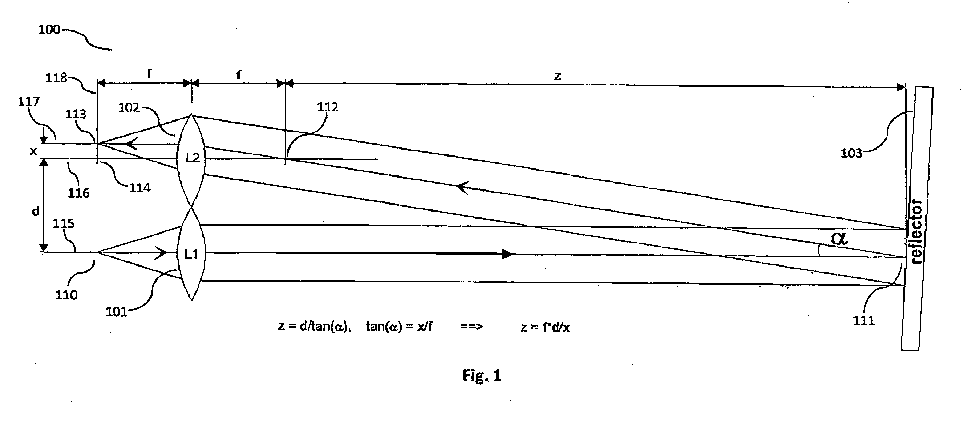

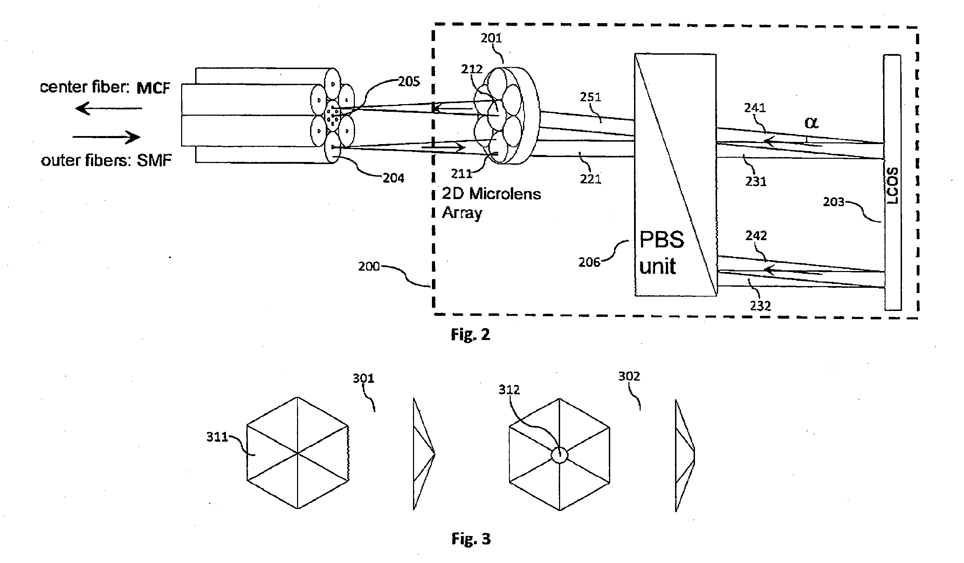

Fig. 1 illustrates an example optical coupling device 100 which illustrates the functional principle of the optical coupling devices described in the present document. The propagation direction of the light is indicated by arrows in Fig. 1 (as well as in Fig. 2). Two lenses L1 101 and L2 102 with the focus length f are arranged adjacent to one another as shown in Fig. 1. The end face of a single mode fiber (SMF) is located at the front focal point 110 of the first lens 101 (also referred to as outer lens), so that the transmitted light is collimated by the first lens L1 101 and then directed to the point 111 on the surface of a reflector 103. The point 111 lies on (the extension of) the optical axis 115 of the first lens 101.

The reflector 103 is configured to reflect the collimated light at an angle α. The reflected light crosses the focal point 112 of the second lens L2 102. Under this condition, the light leaves the second lens L2 102 parallel to the optical axis of the second lens L2 102. In particular, the light leaves the second lens 102 within a distance x from its optical axis as shown in Fig. 1. The light is focused to one core of a multi core fiber (MCF), which is located at the focal plane of the second lens 102 at a point 113 which is positioned at a distance x from the focal point 114 of the second lens 102.

In an embodiment, a SMF is positioned along the optical axis 115 of the first lens 101 with the endface of the SMF being positioned at the focal point 110 of the first lens 101. A MCF is positioned along the optical axis 116 of the second lens 102 with a particular core of the MCF being positioned along the axis 117, wherein the axis 117 is positioned at a distance x from the optical axis 116 of the second lens 102 (also referred to as center lens). The endface of the particular core is positioned at the point 113 on the focal plane 118 of the second lens 102, wherein the point 113 is at a distance x from the focal point 114 of the second lens 102. Using the optical coupling device 100 illustrated in Fig. 1, it is possible to couple the light coming from the SMF to the particular core of the MCF.

The dimensions of the optical coupling device 100, i.e. the focal length f of the first 101 and second 102 lens, the horizontal distance z between the (internal) focal point 112 of the second lens 102, the distance d between the optical axis 115, 116 of the first and second lenses 101, 102, and the distance x of the coupling point 113 from the optical axis 116 of the second lens 102, can be determined using the following formula:

$$z = f \cdot \frac{d}{x}.$$

This formula can be derived based on $z = d / \tan(\alpha)$ and $x / f = \tan(\alpha)$, as can be seen from Fig. 1.

Fig. 2 depicts an example embodiment of an optical coupling device 200 implemented using a Liquid Crystal on Silicon (LCOS) based reflective device 203. In the illustrated example, seven fiber cores are hexagonally arranged within a 7-core MCF 205. The MCF 205 is positioned in the center and it is surrounded by six SMFs 204. The illustrated fiber arrangement can be modified to higher numbers of SMF and cores, e.g. to 18 SMFs 204 surrounding an MCF 205 comprising 19 cores, respectively. In particular, the illustrated fiber arrangement can be modified to allow for MCFs 205 having cores at various distances x from the center of the MCF 205. The cores may be arranged in a circular manner around the center of the MCF 205. The SMFs 204 may be arranged in a corresponding manner around the MCF 205, wherein the ratio between the distance d of the core of an SMF 204 to the center of the MCF 205, and the distance x of the corresponding core of the MCF 205 to the center of the MCF 205 should be constant. In other words, the SMFs 204 should be arranged around the MCF 205 such that d/x is constant for all pairs of a SMFs 204 and a corresponding core of the MCF 205.

The different SMFs 204 transmit different modulated optical signals, respectively. The light beams coming from the respective endfaces of the SMFs 204 are collimated by the outer lenses 211 of a micro-lens array 201. The micro-lens array 201 of Fig. 2 comprises six outer lenses 211 and a center lens 212. Each of the six outer lenses 211 corresponds to the first lens 101 of Fig. 1 for one of the light beams coming from one of the SMFs 204. The endface of an SMF 204 is positioned in the focal point of the corresponding outer lens 211, such that the light beam coming from the SMF 204 is collimated by the outer lens 211 and projected towards the reflective device 203.

In the example shown in Fig. 2, the reflective device 203 is implemented as a LCOS. The LCOS acts as a spatial light modulator (SLM) applying a linear phase function for each incoming light beam, respectively, in order to reflect the light beams coming from the different SMFs 204 under an angle $\alpha$ in the direction of the center lens 212 (e.g. a micro-lens). In other words, the reflective device 203 is configured to reflect the light beam, which comes from a particular SMF 204 and which has been collimated by a particular outer lens 211, at an angle $\alpha$ on the plane defined by the optical axis of the particular outer lens 211 and the center lens 212. This plane corresponds to the plane defined by the core of the SMF 204 and the corresponding core of the MCF 205.

As a result, the different light beams coming from the different SMFs 204 and collimated by the different corresponding outer lenses 211 will be directed from the center lens 212 to the different cores of the MCF 205, respectively.

In the example coupling device 200, the center core of the MCF 205 is not in use. This center core could be addressed from a SMF, whose light has been collimated and transmitted to the center micro-lens 212 through a hole in the center of the reflective device 203, implemented e.g. as an SLM, a MEMS or a segmented mirror. In other words, the reflective device 203 may comprise a hole which provides a tunnel for a collimated light beam directed towards the center lens 212. The collimated light beam hits the center lens 212 at an angle of 0° degrees, such that it is focused onto the center core of the MCF 205 by the center lens 212.

Typically, an LCOS based reflective device 203 is sensitive to the polarization of the incoming light beam. The optical coupling device 200 may comprise a polarization beam splitting unit (PBS unit or PBU) 206 which splits the collimated light beam 221 coming from a particular outer lens 211 into orthogonal polarizations. Furthermore, the PBS unit 206 may be configured to adjust both orthogonal polarizations, in order to be aligned with the polarization required by the LCOS based reflective device 203. As such, the PBS unit 206 provides two beam components 231, 232, wherein the two beam components 231, 232 correspond to two orthogonal polarizations of the collimated light beam 221 coming from the particular outer lens 211, and wherein each of the two beam components 231, 232 is polarized according to the polarization plane required by the LCOS based reflective device 203.

Both beam components 231, 232 are reflected by the LCOS based reflective device 203 with an angle $\alpha$, thereby yielding two reflected beam components 241, 242. The reflected beam components 241, 242 are shifted back to the polarization planes of the incoming collimated light beam 221, and subsequently overlaid to yield a reflected light beam 251. The reflected light beam 251 is focused onto the endface of a core of the MCF 205 using the center lens 212. In an embodiment, the paths of the different polarizations from the PBU 206 to the LCOS based reflective device or spatial light modulator (SLM) 203 and back are of equal length, in order to suppress polarization mode dispersion (PMD).

LCOS based reflective devices 203 are typically controlled electrically. In particular, the reflection angle $\alpha$ may be controlled. This may be used to adjust the optical coupling device 200. By way of example, the LCOS based reflective device 203 may be controlled in order to maximize the optical power coupled from a particular SMF 204 into a particular core of the MCF 205. In other words, an advantage of an LCOS based reflective device 203 may be the increased adaptability to tolerances of the positions of the components, i.e. tolerances to their distances and angles.

As indicated above, the reflective device 203 may be implemented as a mirror. Fig. 3 illustrates example segmented mirrors 301 and 302 which may be used in conjunction with the lens array 201 to build an optical coupling device. The segmented mirror 301 comprises six triangular planes 311 which are arranged in a concave manner to provide an umbrella like reflective device 301. Each triangular plane 311 is inclined by an angle $\alpha$ in order to provide for a reflection as outlined in the context of Fig. 1. Furthermore, each triangular plane 311 is aligned with the plane defined by the optical axis of the respective outer lens 211 and the optical axis of the center lens 212. In other words, each triangular plane 311 is arranged to provide the angled reflection for a corresponding pair of outer lens 211 and center lens 2212, and for a corresponding pair of SMF 204 and core of the MCF 205.

The segmented mirror 302 depicted on the right side of Fig. 3 has a hole 312 in the center. Apart from that, the segmented mirror 302 corresponds to the segmented mirror 301. The hole 312 is configured to let pass (collimated) light coming from an additional SMF positioned on the rear side of the segmented mirror 302. This (collimated) light beam from the additional SMF can be focused onto the center core of the MCF 205 using the center lens 212.

A further possibility to implement a reflective device 103 is through the use of micro-electomechanical systems (MEMS). Such MEMS may comprise a plurality of electrically controllable micro-mirrors configured to reflect the light beams 221 coming from the respective SMFs 204 at an angle $\alpha$ on the plane defined by the axis of the SMF 204 and the axis of the corresponding core of the MCF 205 (or defined by the optical axis of the corresponding outer lens 211 and the optical axis of the center lens 212). In a similar manner to LCOS based reflective devices 203, MEMS based reflective devices may be advantageous due to an increased adaptability to tolerances of the positions of the components, i.e. tolerances of their distances and angles, and due to the possibility of implementing a feedback control mechanism which may be used to optimize the coupling between the plurality of SMFs 204 and the plurality of cores of the MCF 205.

Overall, it may be stated that the described coupling devices 100, 200 are configured to direct a number of input signals (e.g. six) coming from different SMFs 204 via a lens array 201 and a reflective element 203 to different cores of an MCF 205. The MCF 205 may be located in the center of a hexagon composed of the plurality of SMFs 204, e.g. the six SMFs shown in Fig. 2. The reflective element 203 may be implemented as a segmented mirror (as shown in Fig. 3), where each segment 311 has the angle $\alpha$ required for projecting the incoming light of an SMF 204 to a corresponding core of the MCF 205. Alternatively, the reflective element 203 may be implemented as a MEMS or an LCOS. If an LCOS is used, an additional polarization beam unit (PBU) 206 may be used to split the light in orthogonal polarizations and to adjust the orthogonal polarizations to the polarization required by the LCOS.

Typical dimensions of the cores of SMFs 204 and MCFs 205 are in the range of 9 ... 50$\mu$m. Taking into account the total diameters of the SMF / MCF (coated or uncoated), the distance d between the core of an SMF 204 and the center core of an MCF 205 is typically in the range of 250...500$\mu$m, whereas the distance x between an outer core and the center core of the MCF 205 is around 50$\mu$m. The focal length f of the lenses 211, 212 is typically selected in the range of 1mm or less, thereby leading to length z in the range of 5... 10mm. As such, typical optical coupling devices will have the length of a few Millimeters.

In the present document an economical spatial multiplexer for the transmission of a plurality of optical signals within multi-core fibers has been described. In particular, an optical coupling device for coupling the light beams of a plurality of SMFs to a respective plurality of MCFs and/or vice versa has been described. The optical coupling device may comprise an adjustable reflective component, thereby enabling a controlled coupling to and from the plurality of SMFs / the plurality of cores of the MCF.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An optical coupling device (200) adapted to couple light between a plurality of light sources and/or drains (204) and a corresponding plurality of cores of a multi-core fiber (205), respectively; wherein each of the plurality of cores of the multi-core fiber (205) is positioned at a lateral core distance (x) greater zero around a center axis of the multi-core fiber (205), the optical coupling device (200) comprising

- a first interface, at a first side of the optical coupling device (200), adapted to connect with the multi-core fiber (205);
- a plurality of second interfaces, at the first side of the optical coupling device (200) and adjacent to the first interface, the plurality of second interfaces being adapted to

- connect with the corresponding plurality of light sources and/or drains (204), respectively, and
- position each of the plurality of light sources and/or drains (204) at a lateral axis distance (d) greater zero around the center axis of the multi-core fiber (205) such that the plurality of light sources and/or drains (204) form an arrangement which is radial symmetric with the multi-core fiber (205) in a center of the arrangement,

- a lens array (201) comprising a plurality of outer lens (211) and an adjacent center lens (212), wherein

- each of the plurality of outer lenses (211) is adapted to collimate light from a corresponding light source (204) and/or focus light to a corresponding light drain (204) of the plurality of light sources and/or drains (204); and
- the center lens (212) is adapted to collimate light from the center axis of the multi-core fiber (205) and/or focus light to the center axis of the multi-core fiber (205); and

- a reflective device (203), spaced from the lens array (201) opposite of the first side of the optical coupling device (200), adapted to reflect light coming from each of the plurality of outer lenses (211) towards the center lens (212) and/or to reflect light coming from the center lens (212) towards at least one of the plurality of outer lenses (211).

2. The optical coupling device (200) of claim 1, wherein the center lens (212) has a first focal length (f) towards the first side of the optical coupling device (200).

3. The optical coupling device (200) of claim 2, wherein the reflective device (203) is adapted to reflect light at a reflection angle ($\alpha$) depending on the ratio of the core distance (x) and the first focal length (f).

4. The optical coupling device (200) of any of claims 2 to 3, wherein the reflective device (203) is positioned at a longitudinal distance from the center lens (212), wherein the longitudinal distance depends on the first focal length (f), the axis distance (d) and the core distance (x).

5. The optical coupling device (200) of any previous claim, wherein

- the plurality of light sources and/or drains (204) is a plurality of single-mode fibers;
- the plurality of second interfaces is adapted to fix a corresponding plurality of cores of the plurality of single-mode fibers at the axis distance (d) from the center axis of the multi-core fiber (205); and
- the plurality of second interfaces is adapted to fix a plurality of endfaces of the plurality of cores of the plurality of single-mode fibers at a first focal point (110) of the corresponding plurality of outer lenses (211) towards the first side of the optical coupling device (200).

6. The optical coupling device (200) of any claims 1 to 4, wherein

- the plurality of light sources and/or drains (204) is a plurality of photonic transmitters or a plurality of photonic receivers; and
- the plurality of second interfaces is adapted to fix an active surface of the plurality of photonic transmitters or the plurality of photonic receivers at a first focal point (110) of the plurality of outer lenses (211) towards the first side of the optical coupling device (200).

7. The optical coupling device (200) of any previous claim, wherein the first interface is adapted to fix a plurality of endfaces of the plurality of cores of the multi-core fiber (205) at the core distance (x) from a first focal point (114) of the center lens (212) towards the first side of the optical coupling device (200).

8. The optical coupling device (200) of any previous claim, wherein optical axes of the plurality of outer lenses (211) and the center lens (212) are parallel at the axis distance (d).

9. The optical coupling device (200) of any previous claim, wherein

- the reflective device (203) is implemented using liquid crystal on silicon technology, and
- the optical coupling device (200) comprises a polarization unit (206), positioned between the reflective device (203) and the lens array (201), the polarization unit (206) being adapted to

- split light (221) coming from the plurality of outer lenses (211) into two linear polarized light components (231, 232);
- mere two reflected linear polarized light components (241, 242) coming from the reflective device (203).

10. The optical coupling device (200) of claim 9, wherein the polarization unit (206) is adapted such that a light path from an input of the polarization unit (206) facing the lens array (201) towards an output of the polarization unit (206) facing the reflective device (203), in combination with a light path from an input of the polarization unit (206) facing the reflective device (203) towards an output of the polarization unit (206) facing the lens array (201) is substantially the same for the two linear polarized light components (231, 241, 232,242).

11. The optical coupling device (200) of any of claims 1 to 8, wherein the reflective device (203) is

- a segmented mirror (301, 302); and/or
- implemented using a micro-electromechanical system comprising at least one mirror.

12. The optical coupling device (200) of any previous claims, wherein

- the multi-core fiber (205) comprises a center core positioned at the center axis of the multi-core fiber (205);
- the reflective device (203) comprises a hole adapted to let pass light from or towards a center light source and/or drain;
- the optical coupling device (200) comprises a center interface, at a second side of the optical coupling device (200) opposite of the first side, adapted to connect the center light source and/or drain; and
- the center lens (212) is adapted to

- focus the light coming from the center light source onto the center core of the multi-core fiber (205); and/or
- collimate light coming from the center core of the multi-core fiber (205) towards the center light drain.

**Patentansprüche**

1. Optische Koppelvorrichtung (200), ausgelegt für das Koppeln von Licht zwischen einer Vielzahl von Lichtquellen und/oder Drains (204) und jeweils einer entsprechenden Vielzahl von Kernen einer Mehrkernfaser (205), wobei ein jeder der Vielzahl von Kernen der Mehrkernfaser (205) in einem seitlichen Kernabstand (x) größer als Null um eine Mittenachse der Mehrkernfaser (205) herum positioniert ist, wobei die Koppelvorrichtung (200) umfasst:

- Eine erste Schnittstelle an einer ersten Seite der optischen Koppelvorrichtung (200), welche für das Herstellen einer Verbindung mit der Mehrkernfaser (205) ausgelegt ist;
- Eine Vielzahl von zweiten Schnittstellen an der ersten Seite der optischen Koppelvorrichtung (200) und mit der ersten Schnittstelle benachbart, wobei die Vielzahl von zweiten Schnittstellen dazu ausgelegt sind,

- jeweils mit der entsprechenden Vielzahl von Lichtquellen und/oder Drains (204) eine Verbindung herzustellen; und
- eine jeder der Vielzahl von Lichtquellen und/oder Drains (204) in einem seitlichen Kernabstand (d) größer als Null derart um die Mittenachse der Mehrkernfaser (205) zu positionieren, dass die Vielzahl von Lichtquellen und/oder Drains (204) eine Anordnung bilden, welche in einer Mitte der Anordnung mit der Mehrkernfaser (205) radialsymmetrisch ist;

- ein Linsenarray (201) mit einer Vielzahl von äußeren Linsen (211) und einer benachbarten mittleren Linse (212), wobei

- eine jede der Vielzahl von äußeren Linsen (211) fähig ist, Licht von einer entsprechenden Lichtquelle (204) zu kollimieren und/oder Licht an einen entsprechenden Licht-Drain (204) der Vielzahl von Lichtquellen und/oder Drains (204) zu richten; und
- die mittlere Linse (212) dazu ausgelegt ist, Licht von der Mittenachse der Mehrkernfaser (205) zu kollimieren und/oder Licht an die Mittenachse der Mehrkernfaser (205) zu richten; und

- eine Reflexionsvorrichtung (203), welche von dem Linsenarray (201) gegenüber der ersten Seite der optischen Koppelvorrichtung (200) beabstandet angeordnet und dazu ausgelegt ist, von einer jeden der Vielzahl von äußeren Linsen (211) kommendes Licht an die mittlere Linse (212) zu reflektieren und/oder von der mittleren Linse (212) kommendes Licht an mindestens eine der Vielzahl von äußeren Linsen (211) zu reflektieren.

2. Optische Koppelvorrichtung (200) nach Anspruch 1, wobei die mittlere Linse (212) eine erste Brennweite (f) zu der ersten Seite der optischen Koppelvorrichtung (200) aufweist.

3. Optische Koppelvorrichtung (200) nach Anspruch 2, wobei die Reflexionsvorrichtung (203) dazu ausgelegt ist, Licht bei einem Reflexionswinkel (a), welcher von dem Verhältnis zwischen dem Kernabstand (x) und der ersten Brennweite (f) abhängt, zu reflektieren.

4. Optische Koppelvorrichtung (200) nach einem beliebigen der Ansprüche 2 bis 3, wobei die Reflexionsvorrichtung (203) in einem Längsabstand von der mittleren Linse (212) angeordnet ist, wobei der Längsabstand von der ersten Brennweite (f), dem Achsabstand (d) und dem Kernabstand (x) abhängt.

5. Optische Koppelvorrichtung (200) nach einem beliebigen der vorstehenden Ansprüche, wobei

- die Vielzahl von Lichtquellen und/oder Drains (204) eine Vielzahl von Einzelmodusfasern ist;
- die Vielzahl von zweiten Schnittstellen dazu ausgelegt sind, eine entsprechende Vielzahl von Kernen der Vielzahl von Einzelmodusfasern in dem Achsabstand (d) von der Mittenachse der Mehrkernfaser (205) zu fixieren; und
- die Vielzahl von zweiten Schnittstellen dazu ausgelegt sind, eine Vielzahl von Stirnflächen der Vielzahl von Kernen der Vielzahl von Einzelmodusfasern an einem ersten Brennpunkt (110) der entsprechenden Vielzahl von äußeren Linsen (211) zur der ersten Seite der optischen Koppelvorrichtung (200) zu fixieren.

6. Optische Koppelvorrichtung (200) nach einem beliebigen der Ansprüche 1 bis 4, wobei

    - die Vielzahl von Lichtquellen und/oder Drains (204) eine Vielzahl von photonischen Sendern oder eine Vielzahl von photonischen Empfängern ist; und
    - die Vielzahl von zweiten Schnittstellen dazu ausgelegt sind, eine aktive Oberfläche der Vielzahl von photonischen Sendern oder der Vielzahl von photonischen Empfängern einem ersten Brennpunkt (110) der Vielzahl von äußeren Linsen (211) zur der ersten Seite der optischen Koppelvorrichtung (200) zu fixieren.

7. Optische Koppelvorrichtung (200) nach einem beliebigen der vorstehenden Ansprüche, wobei die erste Schnittstelle dazu ausgelegt ist, eine Vielzahl von Stirnflächen der Vielzahl von Kernen der Mehrkernfaser (205) bei dem Kernabstand (x) von einem ersten Brennpunkt (114) der mittleren Linse (212) zu der ersten Seite der optischen Koppelvorrichtung (200) zu fixieren.

8. Optische Koppelvorrichtung (200) nach einem beliebigen der vorstehenden Ansprüche, wobei die optischen Achsen der Vielzahl von äußeren Linsen (211) und der mittleren Linse (212) an dem Achsenabstand (d) parallel sind.

9. Optische Koppelvorrichtung (200) nach einem beliebigen der vorstehenden Ansprüche, wobei

    - die Reflexionsvorrichtung (203) unter Verwendung der Flüssigkristall-auf-Silizium-Technologie implementiert wird; und
    - die optische Koppelvorrichtung (200) eine Polarisationseinheit (206) umfasst, welche zwischen der Reflexionsvorrichtung (203) und dem Linsenarray (201) angeordnet ist, wobei die Polarisationseinheit (206) ausgelegt ist für

       - das Aufspalten von Licht (221), welches von der Vielzahl von äußeren Linsen (211) kommt, in zwei linear polarisierte Lichtkomponenten (231, 232);
       - das Zusammenführen von zwei von der Reflexionsvorrichtung (203) kommenden linear polarisierten Lichtkomponenten (241, 242).

10. Optische Koppelvorrichtung (200) nach Anspruch 9, wobei die Polarisationseinheit (206) derart ausgelegt ist, dass ein Lichtpfad von einem Eingang der Polarisationseinheit (206), welcher dem Linsenarray (201) zugewandt ist, zu einem Ausgang der Polarisationseinheit (206), welcher der Reflexionsvorrichtung (203) zugewandt ist, kombiniert mit einem Lichtpfad von einem Eingang der Polarisationseinheit (206), welcher der Reflexionsvorrichtung (203) zugewandt ist, zu einem Ausgang der Polarisationseinheit (206), welcher dem Linsenarray (201) zugewandt ist, für die zwei linear polarisierten Lichtkomponenten (231, 241, 232, 242) im Wesentlichen derselbe ist.

11. Optische Koppelvorrichtung (200) nach einem beliebigen der Ansprüche 1 bis 8, wobei die Reflexionsvorrichtung (203)

    - ein segmentierter Spiegel (301, 302) ist, und/oder
    - unter Verwendung eines mikroelektromechanischen Systems mit mindestens einem Spiegel implementiert wird.

12. Optische Koppelvorrichtung (200) nach einem beliebigen der vorstehenden Ansprüche, wobei

    - die Mehrkernfaser (205) einen mittleren Kern umfasst, welcher an der Mittenachse der Mehrkernfaser (205) positioniert ist;
    - die Reflexionsvorrichtung (203) ein Loch aufweist, um Licht von oder zu einer mittleren Lichtquelle und/oder einem Drain durchzulassen;
    - die optische Koppelvorrichtung (200) eine an einer zweiten Seite der optischen Koppelvorrichtung (200) gegenüber der ersten Seite angeordnete mittlere Schnittstelle umfasst, welche dazu ausgelegt ist, die mittlere Lichtquelle und/oder den Drain zu verbinden; und
    - die mittlere Linse (212) dazu ausgelegt ist,

       - das von der mittleren Lichtquelle kommende Licht auf den mittleren Kern der Mehrkernfaser (205) zu richten; und/oder
       - das von dem mittleren Kern der Mehrkernfaser (205) kommende Licht zu dem mittleren Licht-Drain zu kollimieren.

**Revendications**

1. Dispositif de couplage optique (200) adapté pour coupler la lumière entre une pluralité de sources et/ou de sorties de lumière (204) et une pluralité correspondante de coeurs d'une fibre mutti-coeurs (205), respectivement ; dans lequel chacun parmi la pluralité de coeurs de la fibre mutti-coeurs (205) est positionné à une distance de coeur latérale (x) supérieure à zéro autour d'un axe central de la fibre multi-coeurs (205), le dispositif de couplage optique (200) comprenant

- une première interface, à un premier côté du dispositif de couplage optique (200), adaptée pour se connecter à la fibre multi-coeurs (205) ;
- une pluralité de deuxièmes interfaces, au premier côté du dispositif de couplage optique (200) et à côté de la première interface, la pluralité de deuxièmes interfaces étant adaptée pour

- se connecter à la pluralité correspondante de sources et/ou de sorties de lumière (204), respectivement ; et
- positionner chacun parmi la pluralité de sources et/ou de sorties de lumière (204) à une distance d'axe latérale (d) supérieure à zéro autour de l'axe central de la fibre mutti-coeurs (205) de sorte que la pluralité de sources et/ou de sorties de lumière (204) forme un agencement qui soit radialement symétrique avec la fibre multi-coeurs (205) dans un centre de l'agencement ;

- un réseau de lentilles (201) comprenant une pluralité de lentilles extérieures (211) et une lentille centrale adjacente (212), dans lequel

- chacune parmi la pluralité de lentilles extérieures (211) est adaptée pour collimater la lumière provenant d'une source de lumière correspondante (204) et/ou pour focaliser la lumière sur une sortie de lumière correspondante (204) de la pluralité de sources et/ou de sorties de lumière (204) ; et
- la lentille centrale (212) est adaptée pour collimater la lumière provenant de l'axe central de la fibre multi-coeurs (205) et/ou pour focaliser la lumière sur l'axe central de la fibre multi-coeurs (205) ; et

- un dispositif réfléchissant (203), espacé du réseau de lentilles (201) en face du premier côté du dispositif de couplage optique (200), adapté pour réfléchir la lumière provenant de chacune parmi la pluralité de lentilles extérieures (211) vers la lentille centrale (212) et/ou pour refléter la lumière provenant de la lentille centrale (212) vers au moins une parmi la pluralité de lentilles extérieures (211).

2. Dispositif de couplage optique (200) selon la revendication 1, dans lequel la lentille centrale (212) a une première longueur focale (f) vers le premier côté du dispositif de couplage optique (200).

3. Dispositif de couplage optique (200) selon la revendication 2, dans lequel le dispositif réfléchissant (203) est adapté pour refléter la lumière à un angle de réflexion (a) dépendant du rapport entre la distance de coeur (x) et la première longueur focale (f).

4. Dispositif de couplage optique (200) selon les revendications 2 et 3, dans lequel le dispositif réfléchissant (203) est positionné à une distance longitudinale de la lentille centrale (212), dans lequel la distance longitudinale dépend de la première longueur focale (f), de la distance d'axe (d) et de la distance de coeur (x).

5. Dispositif de couplage optique (200) selon l'une quelconque des revendications précédentes, dans lequel

- la pluralité de sources et/ou de sorties de lumière (204) est une pluralité de fibres mono-mode ;
- la pluralité de deuxièmes interfaces est adaptée pour fixer une pluralité correspondante de coeurs de la pluralité de fibres mono-mode à la distance d'axe (d) de l'axe central de la fibre multi-coeurs (205) ; et
- la pluralité de deuxièmes interfaces est adaptée pour fixer une pluralité de faces d'extrémité de la pluralité de coeurs de la pluralité de fibres mono-mode à un premier point focal (110) de la pluralité correspondante de lentilles extérieures (211) vers le premier côté du dispositif de couplage optique (200).

6. Dispositif de couplage optique (200) selon l'une quelconque des revendications 1 à 4, dans lequel

- la pluralité de sources et/ou de sorties de lumière (204) est une pluralité d'émetteurs photoniques ou une pluralité de récepteurs photoniques ; et
- la pluralité de deuxièmes interfaces est adaptée pour fixer une surface active de la pluralité d'émetteurs photoniques ou de la pluralité de récepteurs photoniques à un premier point focal (110) de la pluralité de lentilles extérieures (211) vers le premier côté du dispositif de couplage optique (200).

7. Dispositif de couplage optique (200) selon l'une quelconque des revendications précédentes, dans lequel la première interface est adaptée pour fixer une pluralité de faces d'extrémité de la pluralité de coeurs de la fibre multi-coeurs (205) à la distance de coeur (x) d'un premier point local (114) de la lentille centrale (212) vers le premier côté du dispositif de couplage optique (200).

**8.** Dispositif de couplage optique (200) selon l'une quelconque des revendications précédentes, dans lequel des axes optiques de la pluralité de lentilles extérieures (211) et de la lentille centrale (212) sont parallèles à la distance d'axe (d).

**9.** Dispositif de couplage optique (200) selon l'une quelconque des revendications précédentes, dans lequel

- le dispositif réfléchissant (203) est mis en oeuvre en utilisant une technologie de cristaux liquides sur silicium ; et
- le dispositif de couplage optique (200) comprend une unité de polarisation (206), positionnée entre le dispositif réfléchissant (203) et le réseau de lentilles (201), l'unité de polarisation (206) étant adaptée pour

- séparer la lumière (221) provenant de la pluralité de lentilles extérieures (211) en deux composantes de lumière polarisées linéaires (231, 232) ;
- fusionner deux composantes de lumière polarisées linéaires réfléchies (241, 242) provenant du dispositif réfléchissant (203).

**10.** Dispositif de couplage optique (200) selon la revendication 9, dans lequel l'unité de polarisation (206) est adaptée de sorte qu'un trajet de la lumière entre une entrée de l'unité de polarisation (206) faisant face au réseau de lentilles (201) et une sortie de l'unité de polarisation (206) faisant face au dispositif réfléchissant (203), en association avec un trajet de la lumière entre une entrée de l'unité de polarisation (206) faisant face au dispositif réfléchissant (203) et une sortie de l'unité de polarisation (206) faisant face au réseau de lentilles (201) soit sensiblement le même pour les deux composantes de lumière polarisées linéaires (231, 241, 232, 242).

**11.** Dispositif de couplage optique (200) selon l'une quelconque des revendications 1 à 8, dans lequel le dispositif réfléchissant (203) est

- un miroir segmenté (301, 302) ; et/ou
- mis en oeuvre en utilisant un système micro-électromécanique comprenant au moins un miroir.

**12.** Dispositif de couplage optique (200) selon l'une quelconque des revendications précédentes, dans lequel

- la fibre multi-coeurs (205) comprend un coeur central positionné au niveau de l'axe central de la fibre multi-coeurs (205) ;
- le dispositif réfléchissant (203) comprend un orifice adapté pour laisser passer la lumière provenant ou dirigée vers une source et/ou une sortie de lumière centrale ;
- le dispositif de couplage optique (200) comprend une interface centrale, à un deuxième côté du dispositif de couplage optique (200) en face du premier côté, adaptée pour connecter la source et/ou la sortie de lumière centrale ; et la lentille centrale (212) est adapté pour

- focaliser la lumière provenant de la source de lumière centrale sur le coeur central de la fibre multi-coeurs (205) ; et/ou
- collimater la lumière provenant du coeur central de la fibre multi-coeurs (205) vers la sortie de lumière centrale.

$$z = d/\tan(\alpha), \quad \tan(\alpha) = x/f \quad ==> \quad z = f^*d/x$$

**Fig. 1**

EP 2 518 549 B1

**Fig. 2**

center fiber: MCF

outer fibers: SMF

201
212
205
251
241
α
204
211
231
2D Microlens
Array
221
232
206
242
203
200

PBS
unit

LCOS

**Fig. 3**

301
311
312
302

EP 2 518 549 B1

**REFERENCES CITED IN THE DESCRIPTION**

**Patent documents cited in the description**

- US 20040202417 A